# EUROPÄISCHE PATENTSCHRIFT

(11) **EP 2 811 279 B1**
(45) Veröffentlichungstag und Bekanntmachung des Hinweises auf die Patenterteilung: **11.07.2018**
(21) Anmeldenummer: 14167753.4
(22) Anmeldetag: 09.05.2014
(51) Int. Cl.: G01M 7/02, G01H 11/06, G01M 15/14, G01H 1/00, G01M 13/02, G01M 13/04

(54) **Verfahren und Vorrichtung zur Validierung eines elektrischen Signals**
Method and device for validating an electrical signal
Procédé et dispositif de validation d'un signal électrique

(30) Priorität: 03.06.2013 DE 102013210227; 27.11.2013 DE 102013224179
(43) Veröffentlichungstag der Anmeldung: 10.12.2014
(73) Patentinhaber: MTU Aero Engines AG, 80995 München (DE)
(72) Erfinder: Dr. Richter, Klaus, 82239 Alling (DE)

(56) Entgegenhaltungen:
- AU-B2- 526 370
- Yolanda Bolea ET AL: "Structural Pattern Recognition for Industrial Machine Sounds Based on Frequency Spectrum Analysis" In: "Field Programmable Logic and Application", 1. Januar 2004 (2004-01-01), Springer Berlin Heidelberg, Berlin, Heidelberg, XP055150310, ISSN: 0302-9743 ISBN: 978-3-54-045234-8 Bd. 3287, Seiten 287-295, DOI: 10.1007/978-3-540-30463-0_35, * das ganze Dokument *

## Beschreibung

Die Erfindung betrifft eine Vorrichtung zur Validierung eines elektrischen Signals nach dem Oberbegriff des Anspruchs 1. Die Erfindung betrifft ferner ein Verfahren zur Validierung eines elektrischen Signals nach dem Oberbegriff des Anspruchs 8.

Im Allgemeinen ist es wichtig Vibrationen von drehenden Bauteilen zu untersuchen, um festzustellen, ob das drehende Bauteil defekt ist und ob deshalb Reparaturmaßnahmen nötig sind. Ein solches Verfahren ist beispielsweise in der Druckschrift US 7,761,256 B2 offenbart. In diesem Verfahren werden aus einem Drehzahlsignal des drehenden Bauteils Schwingungssignale untersucht, um Rückschlüsse über den mechanischen Zustand des Bauteils treffen zu können.

Dabei ist es insbesondere nachteilig, dass bei hohen Rauschverhältnissen im besten Fall das Schwingungssignal nicht korrekt erkannt werden kann und somit eine Verfälschung der Diagnose über den mechanischen Zustand des Bauteils getroffen wird. Im schlimmsten Fall wird das höhere Rauschsignal als Schwingungssignal interpretiert. Dies kann dazu führen, dass fehlerhafte Rückschlüsse über den mechanischen Zustand des Bauteils getroffen werden. Beispielweise könnte ein defektes Bauteil als intakt angesehen werden. Insbesondere treten solche höhere Rauschsignale verstärkt bei hoher Luftfeuchtigkeit auf und erzeugen insbesondere bei Turbopropellertriebwerken unerwünscht hohe niederfrequente Schwingungen mit einer Frequenz von bis zu 15 Hz. Andere Ursachen für ein stärkeres Rauschen sind hohe Temperaturen und Einstreuungen von anderen elektronischen Bauteilen.

Aus der AU 526 370 B2 geht ein Verfahren zur Detektion von unüblichen Schwingungen bei einer Rotationsmaschine hervor, bei welchem die Quelle der unüblichen Schwingungen dadurch identifiziert wird, dass eine Frequenzanalyse eines Schwingungssignals einer Welle mit einer Trendanalyse der zeitlichen Änderung dieses Schwingungssignals kombiniert wird.

Somit liegt der vorliegenden Erfindung die Aufgabe zu Grunde, ein Verfahren und eine Vorrichtung vorzustellen, das die obigen Nachteile überwindet.

Die Aufgabe wird durch die Merkmale des Anspruchs 1 gelöst.

Die Erfindung betrifft ein Verfahren und eine Vorrichtung zur Validierung eines elektrischen Signals. Die Vorrichtung umfasst mindestens einen Sensor zur Erfassung eines elektrischen Signals, mindestens eine Auswerteeinheit zur Durchführung einer Spektralanalyse des erfassten Signals und zur Erzeugung eines spektralen Signals. Ferner umfasst die Vorrichtung eine Prüfeinheit, die geeignet ist, um zu prüfen, ob im spektralen Signal ein Muster insbesondere die Merkmale einer Maschine mit rotierenden Komponenten, insbesondere einer Gasturbine, vorhanden ist. Dabei sind der Sensor an die Auswerteeinheit und die Auswerteeinheit an die Prüfeinheit angeschlossen. An einem Ausgang der Vorrichtung liegt das erfasste Signal als Messsignal an, wenn die Prüfeinheit das Muster im spektralen Signal erkennt.

Dies ist insbesondere vorteilhaft, da das elektrische Signal im Rauschen, auch wenn ein erhöhter Rauschpegel vorliegt, noch zu verlässig als solches erkannt wird. Ein solcher Sensor, im Weiteren als erster Sensor bezeichnet, kann beispielsweise ein Beschleunigungssensor sein. Unter einer Spektralanalyse ist die Zerlegung des Signals in den entsprechenden Frequenzanteilen, wie beispielsweise mittels FFT (fast fourier Transformation), zu verstehen. Auch können Signalverluste, die durch Leitungsunterbrechungen oder Sensordefekten entstehen können, zuverlässig erkannt kann werden.

In einer vorteilhaften Ausgestaltung der Erfindung liegt am Ausgang der Vorrichtung ein Fehlsignal an, wenn die Prüfeinheit das Muster im spektralen Signal nicht erkennt.

Dies ist insbesondere vorteilhaft, da tatsächliche Signalverluste zuverlässig erkannt werden können.

In einer weiteren vorteilhaften Ausgestaltung der Erfindung ist das Muster von mindestens einer Welle der Maschinen abhängig.

Dabei kann eine Welle eine Antriebswelle oder eine Triebwerkswelle sein. In Triebwerken können typischerweise bis zu drei Wellen vorhanden sein. Beim Drehen erzeugen diese Wellen ein charakteristisches Muster, über das festgestellt werden kann, ob die Maschine läuft. Ein solches Muster kann beispielsweise durch eine minimale (Rest)Unwucht an den Wellen entstehen, die dann als Vibrationen aufgenommen werden können.

In einer weiteren vorteilhaften Ausgestaltung der Erfindung umfasst die Vorrichtung mindestens einen zweiten Sensor zur Erfassung des Musters. In Kombination oder alternativ dazu ist der zweite Sensor an der Prüfeinheit angeschlossen.

Der zweite Sensor erfasst insbesondere die Drehzahl mindestens einer Welle. Es kann sich dabei um einen Hall-Sensor handeln. Vorzugsweise kann die Drehzahl jeder Welle erfasst werden. Damit lässt sich nun in vorteilhafter Weise prüfen, ob im spektralen Signal die Frequenz der Drehzahl der entsprechenden Welle aufzufinden ist. Dabei wird insbesondere die 1. harmonische Frequenz der jeweiligen Drehzahl betrachtet.

In einer weiteren vorteilhaften Ausgestaltung der Erfindung ist die Maschine eine Gasturbine. In einer weiteren vorteilhaften Ausgestaltung der Erfindung ist der Sensor in der Nähe eines Getriebes der Gasturbine, in der Nähe eines Hochdruckverdichters der Gasturbine und/oder in der Nähe einer Hochdruckturbine der Gasturbine angeordnet.

Dies ist insbesondere vorteilhaft, da damit die durch Sensoren erfassten Signale zur Erkennung eines Defektes beitragen und alle möglichen für einen Defekt charakteristische Schwingungen zuverlässig erfasst werden können.

Weitere vorteilhafte Ausgestaltung der Erfindung sind in den Unteransprüchen wiedergegeben.

Im Weiteren werden anhand der schematischen Zeichnung bevorzugte Ausführungsbeispiele der Erfindung näher beschrieben. Dabei zeigen:
- Figur 1: einen Längsschnitt durch den oberen Bereich einer Gasturbine
- Figur 2: ein Ablaufdiagramm für die Validierung des Messsignals,
- Figur 3: einen Graphen mit zwei spektralen Signalen und
- Figur 4: einen Graphen mit zwei Drehzahlsignalen.

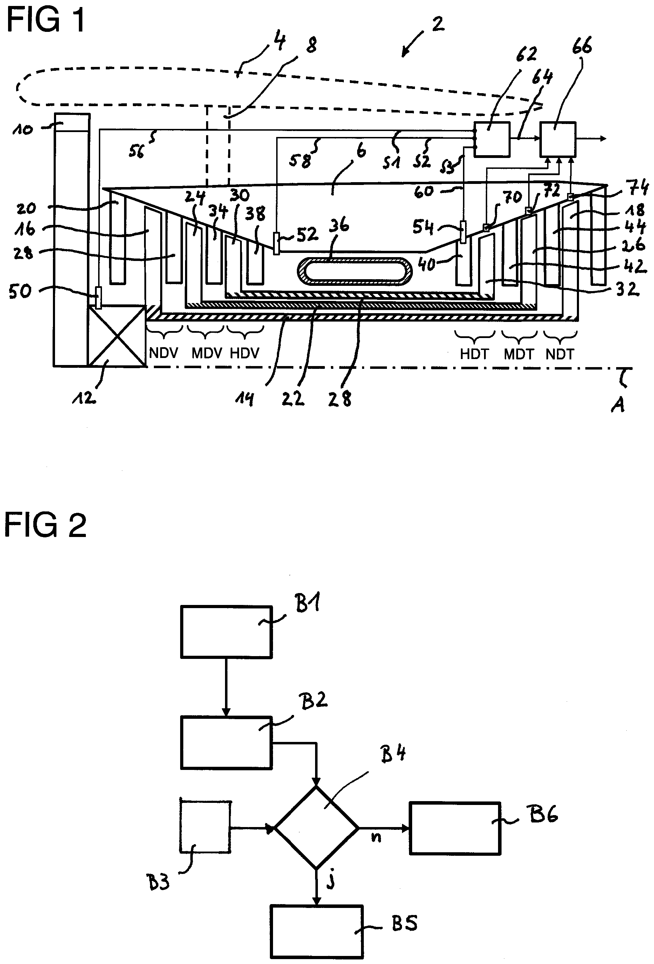

In Figur 1 wird ein Längsschnitt durch den oberen Bereich einer Gasturbine gezeigt. Bei einem Mantelstromtriebwerk kann die Gasturbine 2 im oberen Bereich ein hier horizontal verlaufendes und gestrichelt dargestelltes Fangehäuse 4 aufweisen, das über eine hier vertikal verlaufende ebenfalls gestrichelt dargestellte Strebe 8 mit einem im unteren Bereich horizontal verlaufendes Triebwerksgehäuse 6 verbunden ist. Die Gasturbine 2 weist im linken Bereich insbesondere bei einem Mantelstromtriebwerk einen Fan 10 auf, der über ein Untersetzungsgetriebe 12 mit einer Niederdruckwelle 14 verbunden ist. An der Niederdruckwelle 14 radial nach außen ragend (hier nur vertikal verlaufend) ist am linken Ende eine Niederdruckverdichterschaufel 16 befestigt. Am rechten Ende der Niederdruckwelle 14 ist eine Niederdruckturbinenschaufel 18 befestigt. Diese Niederdruckwelle 14 dreht um die Triebwerksachse A. Zwischen dem Fan 10 und der ND-Verdichterschaufel 14 ist eine Vorderleitrad (IGV: inlet guide vane) 20 angeordnet. Um die Niederdruckwelle 14 kann eine sogenannte Mitteldruckwelle 22 angeordnet sein, an dessen linken Ende eine Mitteldruckverdichterlaufschaufel 24 und an dessen rechten Ende eine Mitteldruckturbinenlaufschaufel 26 befestigt sind. Bei einem sogenannten Zweiwellentriebwerk ist die Mitteldruckwelle 22 nicht vorhanden. Zwischen der MD-Verdichterlaufschaufel 24 und der ND-Verdichterlaufschaufel 16 ist eine ND-Verdichterleitschaufel 28 angeordnet, die zusammen mit der ND-Verdichterlaufschaufel 16 eine sogenannte NDV-Stufe bildet. Dabei kann ein Niederdruckverdichter NDV durchaus mehrere solcher Stufen NDV aufweisen. Hier wurden lediglich eine Stufe abgebildet. Bei einem einen Turbopropellertriebwerk fehlen die Bauteile 4 und 8 und das Bauteil 10 wird dann als Propeller bezeichnet.

Ganz außen um die Mitteldruckwelle 22 ist die Hochdruckwelle 28 angeordnet, an dessen linken Ende die Hochdruckverdichterlaufschaufel 30 und an dessen rechten Ende die Hochdruckturbinenlaufschaufel 32 befestigt sind. Zwischen der HD-Verdichterlaufschaufel 30 und der MD-Verdichterlaufschaufel 24 ist eine MD-Verdichterleitschaufel 34 angeordnet, die zusammen mit der MD-Verdichterlaufschaufel 24 eine Stufe des Mitteldruckverdichters MDV bilden. Dabei kann ein Mitteldruckverdichter MDV durchaus mehrere solcher Stufen MDV aufweisen. Hier wurden lediglich eine Stufe abgebildet. Alle Wellen 14, 22 und 28 drehen um die Triebwerksachse A.

In der Mitte des Triebwerks 2 ist eine Brennkammer 36 angeordnet. Links zwischen der Brennkammer 36 und der Hochdruckverdichterlaufschaufel 30 ist eine Hochdruckverdichterleitschaufel 38 angeordnet, die zusammen eine Stufe des Hochdruckverdichters HDV bilden. Dabei kann ein Hochdruckverdichter HDV durchaus mehrere solcher Stufen HDV aufweisen. Hier wurden lediglich eine Stufe abgebildet.
Rechts zwischen der Brennkammer 36 und der Hochdruckturbinenlaufschaufel 32 ist eine Hochdruckturbinenleitschaufel 40 angeordnet, die zusammen eine Stufe der Hochdruckturbine HDT bilden. Dabei kann eine Hochdruckturbine HDT durchaus mehrere solcher Stufen aufweisen. Hier wurden lediglich eine Stufe abgebildet.

Zwischen der Hochdruckturbinenlaufschaufel 32 und der Mitteldruckturbinenlaufschaufel 26 ist eine Mitteldruckturbinenleitschaufel 42 am Gehäuse 6 befestigt, die zusammen mit der Mitteldruckturbinenlaufschaufel 26 eine Stufe der Mitteldruckturbine MDT bildet. Zwischen der Mitteldruckturbinenlaufschaufel 26 und der ND-Turbinenlaufschaufel 18 ist eine ND-Turbinenleitschaufel 44 am Gehäuse 6 befestigt, die zusammen mit der ND-Turbinenlaufschaufel 26 eine Stufe der Niederdruckturbine NDT bildet. Dabei können die Mitteldruckturbine MDT und/oder die Niederdruckturbine NDT durchaus mehrere solcher Stufen aufweisen. Hier wurden lediglich jeweils eine Stufe abgebildet.

Im Betrieb des Triebwerks 2 rotieren die Wellen 14, 22 und 28 samt den daran angeschlossenen Bauteilen (wie Schaufeln). Dabei haben die Welle 14, 22 und 28 immer eine kleine Unwucht, die Vibrationen mit bestimmten Frequenzen verursachen.

Zur Erfassung eines elektrischen Signals S1, hier vorzugsweise mechanische Vibrationen, kann am Untersetzungsgetriebe 12 ein erster Sensor 50 angeordnet sein. Zur Erfassung eines elektrischen Signals S2, hier vorzugsweise mechanische Vibrationen, kann im Bereich zwischen der Hochdruckverdichterleitschaufel 38 und der Brennkammer 36 am Gehäuse 6 ein weiterer erster Sensor 52 angeordnet sein. Zur Erfassung eines elektrischen Signals S3, hier vorzugsweise mechanische Vibrationen, kann im Bereich zwischen der Hochdruckturbinenleitschaufel 40 und der Brennkammer 36 am Gehäuse 6 noch ein weiterer erster Sensor 54 angeordnet sein. Diese ersten Sensoren 50, 52, 54 sind über die elektrischen Leitung 56, 58 und 60 an eine Auswerteeinheit 62 angeschlossen, die über die weitere elektrische Leitung 64 an die Prüfeinheit 66 angeschlossen ist.

Zur Erfassung eines Musters, das für eine Maschine mit rotierenden Komponenten charakteristisch ist, sind zweite Sensoren 70, 72, 74, hier drei Drehzahlsensoren, über den entsprechenden Stufen der Laufschaufeln angeordnet, um die Drehzahl der Niederdruckwelle 14, der Mitteldruckwelle 22 und der Hochdruckwelle 28 zu erfassen. Diese zweiten Sensoren 70, 72, 74 sind an die Prüfeinheit 66 über entsprechende Leitungen angeschlossen.

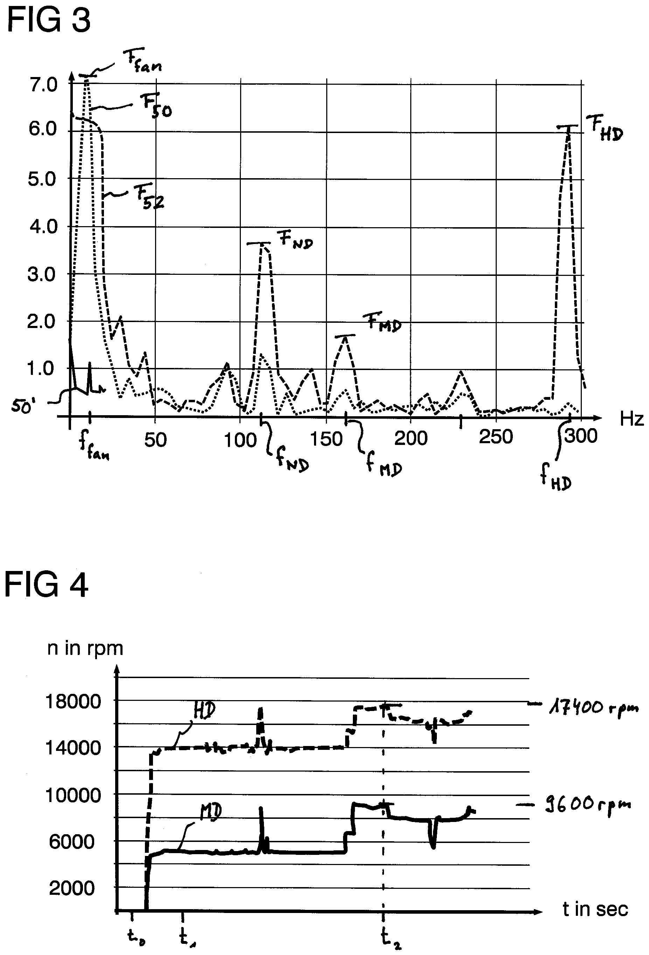

In Figur 4 sind über die Zeit die Signale der zweiten Sensoren 72 und 74 erfasst worden. Die obere Kurve gibt den zeitlichen Drehzahlverlauf in Umdrehung pro Minute (rpm) der Hochdruckwelle 28 einer Flugmission wieder. Die untere Kurve gibt den zeitlichen Drehzahlverlauf der Mitteldruckwelle 22 der gleichen Flugmission wieder. Zum Zeitpunkt t₁ befindet sich das Flugzeug noch auf der Rollbahn, so dass die Triebwerke mit sehr geringer Leistung betrieben werden. Zum Zeitpunkt t₂ befindet sich das Flugzeug im Steigflug und von den Triebwerken wird mehr Leistung abverlangt als zum Zeitpunkt t₁. Dies äußerst sich darin, dass die Drehzahlen der HD-Welle als auch der MD-Welle erhöht sind. Die Drehzahl an der HD-Welle 28 beträgt zum Zeitpunkt t₂ um die 17400 Umin. Dies entspricht etwa einer Frequenz von 290 Hz. Die Drehzahl an der MD-Welle 22 beträgt ca. 9600 Umin (Umdrehungen pro Minute). Dies entspricht einer Frequenz von ca. 160 Hz. Diese Signale erhält die Prüfeinheit 66.

In der Figur 3 ist das Spektrum F₅₀ des Messsignale S1 und das Spektrum F₅₂ des Messsignals S2 zum Zeitpunkt t₂ abgebildet, die die Auswerteeinheit 62 an die Prüfeinheit 66 übergibt. Dabei wird die Amplitude über der Frequenz angezeigt.

Für das Messsignal S1, das vom ersten Sensor 50 vom Untersetzungsgetriebe kommt, wird das Summensignal in der Prüfeinheit 66 wie folgt gebildet: ∑_{S1} = F_{fan} + F_{ND} + F_{MD}, wobei F_{fan} die Amplitude bzw. Intensität der erstenharmonische Frequenz f_{fan} des Fans 10 bzw. des Propellers, F_{ND} die Amplitude der ersten harmonischen Frequenz f_{ND} der Niederdruckwelle 14 und F_{MD} die Amplitude der ersten harmonischen Frequenz f_{MD} der Mitteldruckwelle 22 wiedergibt. Dieses Summensignal F₅₀ ist als gepunktete Kurve nun in der Figur 3 abgebildet. Dabei gibt der Index den entsprechenden Sensor an. Das Messsignal S1 muss etwas anders behandelt werden als die Messsignale S2 und S3, da im Messsignal S1 keine Frequenz um die 290 Hz von der Hochdruckwelle 28 zu erkennen ist, dafür aber die Amplitude F_{Fan} der harmonischen Frequenz f_{fan} des Fans 10 bestimmt werden muss. Die Frequenz f_{ND} der ND-Welle 14 liegt bei ca. 120 Hz und der Fan 10 erzeugt eine Frequenz f_{fan} von ca. 12 Hz (siehe Figur 3). Dies liegt daran, dass das Untersetzungsgetriebe 12 ein (meist) festes Untersetzungsverhältnis typischerweise von 1:3 bei Mantelstromtriebwerken und typischerweise ein Untersetzungsverhältnis von 1:10 bei Turboproptriebwerken aufweist.

Die breitbandigen Spektren F₅₀ und F₅₂ sind für niedrige Frequenzen kleiner 25 Hz wegen der schlechten Auflösung von ca. 5 Hz unbrauchbar. Aus diesem Grund wird für das Messsignal S1 ein zweites Spektrum F_{50'} mit geringerem Frequenzumfang (bspw. von 0 bis 30 Hz) aber besserer Auflösung von ca. 0,6 Hz ermittelt. Dadurch wird das Spektrum 50' (siehe Figur 3) in den niedrigen Frequenzen detailreicher.

Im Unterschied dazu wird das Summensignal für das Messsignal S2 wie folgt gebildet: ∑ₛ₂= F_{ND} + F_{MD} + F_{HD}, wobei die Amplitude F_{HD} der Intensität bei der ersten harmonischen Frequenz f_{HD} der Hochdruckwelle 28 wiedergibt. Im Vergleich zum obigen Summensignal F₅₀ wurde die Amplitude F_{fan} durch die Amplitude F_{HD} ersetzt. Dieses Summensignal F₅₂ ist als gestrichelte Kurve nun in der Figur 3 abgebildet. Dagegen sind die Frequenzen der MD-Welle 22 um die 160 Hz und der HD-Welle 28 um die 290 Hz sehr gut erkennbar. Es ist anzumerken, dass die einzelnen Summensignale F₅₀ und F₅₂ jeweils für sich das spektrale Signal wiedergeben.

In der Figur 2 ist ein Ablaufdiagramm für die Validierung des Messsignals wiedergeben. Anhand dieser Figur wird der Verfahrensablauf im Folgenden näher beschrieben. Im Block B1 wird mindestens eines der Messsignal S1 bis S3 mittels der Sensoren 50, 52 und 54 erfasst. Das erfasste Signal S1 bis S3 wird über die Leitungen 56 bis 60 an die Auswerteeinheit 62 übergeben. Im Block B2 ermittelt die Auswerteeinheit 62 die Spektren der erfassten Signale S1 bis S3 und übergibt diese an die Prüfeinheit 66. In der Prüfeinheit 66 werden auch die Drehzahlen der Wellen 14, 22 und 28 in Block B3 gemessen, so dass die beschriebenen Summensignale F₅₀ und F₅₂ in Block B4 ermittelt werden können.

Im Block B4 vergleicht die Prüfeinheit 66 auch zu jedem Zeitpunkt der Mission, beispielsweise zum Zeitpunkt t₂ (siehe Figur 4), ob jedes Summensignal, beispielweise F₅₂, die für dieses laufende Triebwerk und für diese Messstelle eine charakteristische Mindestintensität aufweist. Die Mindestintensität kann eine Konstante, ein prozentualer Anteil der gesamten Signalstärke oder eine Funktion von Parametern sein. Wird das erfasste Signal S2 für gut befunden, also für gültig erklärt, so kann in Block B5 das erfasste Messsignal für weitere, hier nicht beschriebene, Auswertungen verwenden. Ist dagegen der Sensor defekt oder nicht korrekt angeschlossen, so fällt die Überprüfung negativ aus. In Block B6 wird eine entsprechende Fehlermeldung generiert und das Messsignal als ungültig erklärt, so dass es nicht weiter verwendet wird.

Harmonische Schwingungen können nur für laufende Triebwerke gemessen werden. Findet daher die Prüfung im Block B4 zum Zeitpunkt t₀ statt, bei dem das Triebwerk noch nicht läuft, ist keine Signalvalidierung anhand des beschriebenen Verfahrens möglich.

Somit liegt der vorliegenden Erfindung also die prinzipielle Idee zu Grunde in einem Vibrationssignal einen Parameter zu bestimmen, der ein Maß für die für das laufende Triebwerk charakteristische Schwingungen darstellt. Anhand des Parameters kann dann auch bei verrauschten Signalen entschieden werden, ob das Vibrationssignal zur Schwingungsüberwachung geeignet ist oder ob es keine realen Triebwerksschwingungen enthält.

### Bezugszeichenliste

- 2: Mantelstromtriebwerk
- 4: Fangehäuse
- 6: Triebwerksgehäuse
- 8: Strebe
- 10: Fan bzw. Propeller
- 12: Untersetzungsgetriebe
- 14: Niederdruckwelle
- 16: ND-Verdichterlaufschaufel
- 18: ND- Turbinenlaufschaufel
- 20: Vorderleitrad
- 22: Mitteldruckwelle
- 24: MD-Verdichterlaufschaufel
- 26: MD-Turbinenlaufschaufel
- 28: HD-Welle
- 30: Hochdruckverdichterlaufschaufel
- 32: Hochdruckturbinenlaufschaufel
- 34: MD- Verdichterleitschaufel
- 36: Brennkammer
- 38: Hochdruckverdichterleitschaufel
- 40: Hochdruckturbinenleitschaufel
- 42: Mitteldruckturbinenleitschaufel
- 44: ND-Turbinenleitschaufel
- 50, 52, 54: erster Sensor
- 56, 58, 60: elektrische Leitung
- 62: Auswerteeinheit
- 64: weitere elektrische Leitung
- A: Triebwerksachse
- F_{50, 52}: spektrales Signal (Summensignal)
- f_{Fan}, f_{ND}, f_{MD}, f_{HD},: erste harmonische Frequenz der entsprechenden Wellen
- F_{Fan}, F_{ND}, F_{MD},: Signalamplitude an der entsprechenden Frequenz
- F_{HD} HD: Hochdruck
- HDT: Hochdruckturbine
- HDV: Hochdruckverdichter
- MD: Mitteldruck
- MDT: Mitteldruckturbine
- MDV: Mitteldruckverdichter
- ND: Niederdruck
- NDT: Niederdruckturbine
- NDV: Niederdruckverdichter
- t_{0,1,2}: Zeitpunkte

## Patentansprüche

1. Vorrichtung zur Validierung eines elektrischen Signals mit
- mindestens einem Sensor (50, 52, 54) zur Erfassung eines elektrischen Signals (S1, S2, S3),
- mindestens einer Auswerteeinheit (62) zur Durchführung einer Spektralanalyse des erfassten Signals (S1, S2, S3) und zur Erzeugung eines spektralen Signals (F₅₀, F₅₂, F₅₄),
- einer Prüfeinheit (66), die geeignet ist, um zu prüfen, ob im spektralen Signal (F₅₀, F₅₂), ein Muster (f_{Fan}, f_{ND}, f_{MD}, f_{HD}) einer Maschine, insbesondere einer Gasturbine, vorhanden ist,
wobei der Sensor (50, 52, 54) an die Auswerteeinheit (62) und die Auswerteeinheit (62) an die Prüfeinheit (66) angeschlossen sind,
**dadurch gekennzeichnet, dass**
an einem Ausgang der Vorrichtung das erfasste Signal (S1) als Messsignal anliegt, wenn die Prüfeinheit (66) das Muster (f_{Fan}, f_{ND}, f_{MD}, f_{HD}) im spektralen Signal (F₅₀, F₅₂) erkennt und
am Ausgang der Vorrichtung das erfasste Signal nicht anliegt, wenn die Prüfeinheit (66) das Muster (f_{Fan}, f_{ND}, f_{MD}, f_{HD}) im spektralen Signal (F₅₀, F₅₂) nicht erkennt.

2. Vorrichtung nach Anspruch 1, **dadurch gekennzeichnet, dass** das erfasste Signal (S1, S2, S3) ein Schwingungssignal ist.

3. Vorrichtung nach mindestens einem der vorherigen Ansprüche, **dadurch gekennzeichnet, dass** das Muster (f_{Fan}, f_{ND}, f_{MD}, f_{HD}) von mindestens einer Welle (14, 22, 28) der Maschinen abhängig ist.

4. Vorrichtung nach mindestens einem der vorherigen Ansprüche, **dadurch gekennzeichnet, dass** die Vorrichtung mindestens einen zweiten Sensor (70, 72, 74) zur Erfassung des Musters aufweist und/oder der zweite Sensor (70, 72, 74) an der Prüfeinheit (66) angeschlossen ist.

5. Vorrichtung nach mindestens einem der vorherigen Ansprüche, **dadurch gekennzeichnet, dass** die Maschine eine Gasturbine ist.

6. Vorrichtung nach Anspruch 5, **dadurch gekennzeichnet, dass** der Sensor in der Nähe (50) eines Getriebes (12) der Gasturbine, in der Nähe (52) eines Hochdruckverdichters (HDV, 38) der Gasturbine und/oder in der Nähe (54) einer Hochdruckturbine (HDT, 40) der Gasturbine angeordnet ist.

7. Vorrichtung nach mindestens einem der vorherigen Ansprüche, **dadurch gekennzeichnet, dass** am Ausgang der Vorrichtung ein Fehlsignal anliegt, wenn die Prüfeinheit (66) das Muster (f_{Fan}, f_{ND}, f_{MD}, f_{HD}) im spektralen Signal nicht erkennt.

8. Verfahren zur Validierung eines elektrischen Signals mit folgenden Schritten:
a. Erfassen (B1) mindestens eines elektrischen Signals (S1, S2, S3),
b. Durchführen (B2) einer Spektralanalyse des erfassten Signals (S1, S2, S3),
c. Erzeugen eines spektralen Signals (F₅₀, F₅₂) in Abhängigkeit von Schritt b.,
d. Prüfen (B4), ob im spektralen Signal (F₅₀, F₅₂) ein Muster (f_{Fan}, f_{ND}, f_{MD}, f_{HD}) einer Maschine (2) mit rotierenden Komponenten, insbesondere einer Gasturbine, vorhanden ist,
**dadurch gekennzeichnet, dass**
e. Einstufen (B5) des erfassten Signals als Messsignal, wenn die Prüfung in Schritt d. positiv ausfällt und
f. Einstufen (B6) des erfassten Signals als Fehlsignal, wenn die Prüfung in Schritt d. negativ ausfällt,
wobei das erfasste Signal (S1) als Messsignal an einen Ausgang einer Vorrichtung angelegt wird, wenn das Muster (fFan, fND, fMD, fHD) im spektralen Signal (F50, F52) vorhanden ist, und wobei das erfasste Signal (S1) nicht an den Ausgang der Vorrichtung angelegt wird, wenn das Muster (fFan, fND, fMD, fHD) im spektralen Signal (F50, F52) nicht erkannt wird.

9. Verfahren nach Anspruch 8, **dadurch gekennzeichnet, dass**
das elektrische Signal (S1, S2, S3) ein Schwingungssignal ist.

10. Verfahren nach mindestens einem der Ansprüche 8 bis 9, **dadurch gekennzeichnet, dass** das Muster (f_{Fan}, f_{ND}, f_{MD}, f_{HD}) von mindestens einer Welle (14, 22, 28) der Maschine abhängig ist.

11. Verfahren nach mindestens einem der Ansprüche 8 bis 10, **dadurch gekennzeichnet, dass** das Muster (f_{Fan}, f_{ND}, f_{MD}, f_{HD}) vor dem Schritt d. erfasst wird (B3) und im Schritt d. (B4) mit dem spektralen Signal (F₅₀, F₅₂, F₅₄) verglichen wird.

12. Verfahren nach mindestens einem der Ansprüche 8 bis 11, **dadurch gekennzeichnet, dass** die Maschine eine Gasturbine ist.

13. Verfahren nach Anspruch 12, **dadurch gekennzeichnet, dass** in Schritt a. das elektrische Signal in der Nähe eines Getriebes (12) der Gasturbine, in der Nähe eines Hochdruckverdichters (HDV) der Gasturbine und/oder in der Nähe einer Hochdruckturbine (HDT) erfasst wird.

14. Strömungsmaschine umfasst eine Vorrichtung nach einem der Ansprüche 1 bis 7.

## Claims

1. Device for validating an electrical signal, comprising
- at least one sensor (50, 52, 54) for detecting an electrical signal (S1, S2, S3),
- at least one analysis unit (62) for performing spectral analysis of the detected signal (S1, S2, S3) and for generating a spectral signal (F₅₀, F₅₂, F₅₄),
- a verification unit (66) suitable for verifying whether a pattern (f_{Fan}, f_{ND}, f_{MD}, f_{HD}) of a machine, in particular a gas turbine, is present in the spectral signal (F₅₀, F₅₂),
the sensor (50, 52, 54) being connected to the analysis unit (62) and the analysis unit (62) being connected to the verification unit (66),
**characterized in that**
the detected signal (S1) is applied as a measurement signal at an output of the device if the verification unit (66) identifies the pattern (f_{Fan}, f_{ND}, f_{MD}, f_{HD}) in the spectral signal (F₅₀, F₅₂), and the detected signal is not applied at the output of the device if the verification unit (66) does not identify the pattern (f_{Fan}, f_{ND}, f_{MD}, f_{HD}) in the spectral signal (F₅₀, F₅₂).

2. Device according to claim 1, **characterized in that** the detected signal (S1, S2, S3) is an oscillation signal.

3. Device according to at least one of the preceding claims, **characterized in that** the pattern (f_{Fan}, f_{ND}, f_{MD}, f_{HD}) depends on at least one shaft (14, 22, 28) of the machines.

4. Device according to at least one of the preceding claims, **characterized in that** the device comprises at least a second sensor (70, 72, 74) for detecting the pattern and/or the second sensor (70, 72, 74) is connected to the verification unit (66).

5. Device according to at least one of the preceding claims, **characterized in that** the machine is a gas turbine.

6. Device according to claim 5, **characterized in that** the sensor is arranged in the vicinity (50) of a gear (12) of the gas turbine, in the vicinity (52) of a high-pressure compressor (HDV, 38) of the gas turbine and/or in the vicinity (54) of a high-pressure turbine (HDT, 40) of the gas turbine.

7. Device according to at least one of the preceding claims, **characterized in that** an error signal is applied at the output of the device if the verification unit (66) does not identify the pattern (f_{Fan}, f_{ND}, f_{MD}, f_{HD}) in the spectral signal.

8. Method for validating an electrical signal, comprising the following steps:
a. detecting (B1) at least one electrical signal (S1, S2, S3),
b. performing (B2) spectral analysis of the detected signal (S1, S2, S3),
c. generating a spectral signal (F₅₀, F₅₂) on the basis of step b.,
d. verifying (B4) whether a pattern (f_{Fan}, f_{ND}, f_{MD}, f_{HD}) of a machine (2) having rotating
components, in particular a gas turbine, is present in the spectral signal (F₅₀, F₅₂), **characterized by**
e. classifying (B5) the detected signal as a measurement signal if the verification in step d. is positive, and
f. classifying (B6) the detected signal as an error signal if the verification in step d. is negative,
the detected signal (S1) being applied as a measurement signal at an output of a device if the pattern (f_{Fan}, f_{ND}, f_{MD}, f_{HD}) is present in the spectral signal (F₅₀, F₅₂), and the detected signal (S1) not being applied at the output of the device if the pattern (f_{Fan}, f_{ND}, f_{MD}, f_{HD}) is not identified in the spectral signal (F₅₀, F₅₂).

9. Method according to claim 8, **characterized in that** the electrical signal (S1, S2, S3) is an oscillation signal.

10. Method according to at least one of claims 8 and 9, **characterized in that** the pattern (f_{Fan}, f_{ND}, f_{MD}, f_{HD}) depends on at least one shaft (14, 22, 28) of the machine.

11. Method according to at least one of claims 8 to 10, **characterized in that** the pattern (f_{Fan}, f_{ND}, f_{MD}, f_{HD}) is detected (B3) before step d. and is compared with the spectral signal (F₅₀, F₅₂, F₅₄) in step d (B4).

12. Method according to at least one of claims 8 to 11, **characterized in that** the machine is a gas turbine.

13. Method according to claim 12, **characterized in that**, in step a., the electrical signal is detected in the vicinity of a gear (12) of the gas turbine, in the vicinity of a high-pressure compressor (HDV) of the gas turbine and/or in the vicinity of a high-pressure turbine (HDT).

14. Turbomachine comprising a device according to any of claims 1 to 7.

## Revendications

1. Dispositif de validation d'un signal électrique, comprenant
- au moins un capteur (50, 52, 54) destiné à détecter un signal électrique (S1, S2, S3),
- au moins une unité d'évaluation (62) destinée à effectuer une analyse spectrale du signal détecté (S1, S2, S3) et à générer un signal spectral (F₅₀, F₅₂, F₅₄),
- une unité de test (66) qui est adaptée pour vérifier si un motif (f_{Fan}, f_{ND}, f_{MD}, f_{HD}) d'une machine, en particulier une turbine à gaz, est présent dans le signal spectral (F₅₀, F₅₂),
le capteur (50, 52, 54) étant raccordé à l'unité d'évaluation (62) et l'unité d'analyse (62) étant raccordée à l'unité de test (66),
**caractérisé en ce que**
le signal détecté (S1) est appliqué comme signal de mesure à une sortie du dispositif lorsque l'unité de test (66) reconnaît le motif (f_{Fan}, f_{ND}, f_{MD}, f_{HD}) dans le signal spectral (F₅₀, F₅₂), et
le signal détecté n'est pas appliqué à la sortie du dispositif lorsque l'unité de test (66) ne reconnaît pas le motif (f_{Fan}, f_{ND}, f_{MD}, f_{HD}) dans le signal spectral (F₅₀, F₅₂).

2. Dispositif selon la revendication 1, **caractérisé en ce que** le signal détecté (S1, S2, S3) est un signal vibratoire.

3. Dispositif selon au moins l'une des revendications précédentes, **caractérisé en ce que** le motif (f_{Fan}, f_{ND}, f_{MD}, f_{HD}) dépend d'au moins un arbre (14, 22, 28) des machines.

4. Dispositif selon au moins l'une des revendications précédentes, **caractérisé en ce que** le dispositif comprend au moins un deuxième capteur (70, 72, 74) destiné à détecter le motif et/ou **en ce que** le deuxième capteur (70, 72, 74) est raccordé à l'unité de test (66).

5. Dispositif selon au moins l'une des revendications précédentes, **caractérisé en ce que** la machine est une turbine à gaz.

6. Dispositif selon la revendication 5, **caractérisé en ce que** le capteur est disposé dans le voisinage (50) d'une transmission (12) de la turbine à gaz, dans le voisinage (52) d'un compresseur à haute pression (HDV, 38) de la turbine à gaz et/ou dans le voisinage (54) d'une turbine à haute pression (HDT, 40) de la turbine à gaz.

7. Dispositif selon au moins l'une des revendications précédentes, **caractérisé en ce qu'**un signal d'erreur est appliqué à la sortie du dispositif lorsque l'unité de test (66) ne détecte pas le motif (f_{Fan}, f_{ND}, f_{MD}, f_{HD}) dans le signal spectral.

8. Procédé de validation d'un signal électrique, comprenant les étapes suivantes :
a. détecter (B1) au moins un signal électrique (S1, S2, S3),
b. effectuer (B2) une analyse spectrale du signal détecté (S1, S2, S3),
c. générer un signal spectral (F₅₀, F₅₂) en fonction de l'étape b.,
d. vérifier (B4) si un motif (f_{Fan}, f_{ND}, f_{MD}, f_{HD}) d'une machine (2), comportant des composants tournants, en particulier une turbine à gaz, est présent dans le signal spectral (F₅₀, F₅₂), **caractérisé par**
e. le classement (B5) du signal détecté comme signal de mesure si le test de l'étape d. se révèle positif et
f. le classement (B6) du signal détecté comme signal d'erreur si le test de l'étape d. se révèle négatif,
ledit signal détecté (S1) est appliqué comme signal de mesure à une sortie d'un dispositif lorsque le motif (f_{Fan}, f_{ND}, f_{MD}, f_{HD}) est présent dans le signal spectral (F₅₀, F₅₂), et le signal détecté (S1) n'est pas appliqué à la sortie de l'appareil si le motif (f_{Fan}, f_{ND}, f_{MD}, f_{HD}) n'est pas détecté dans le signal spectral (F₅₀, F₅₂).

9. Procédé selon la revendication 8, **caractérisé en ce que** le signal électrique (S1, S2, S3) est un signal vibratoire.

10. Procédé selon au moins l'une des revendications 8 à 9, **caractérisé en ce que** le motif (f_{Fan}, f_{ND}, f_{MD}, f_{HD}) dépend d'au moins un arbre (14, 22, 28) de la machine.

11. Procédé selon au moins l'une des revendications 8 à 10, **caractérisé en ce que** le motif (f_{Fan}, f_{ND}, f_{MD}, f_{HD}) est détecté (B3) avant l'étape d. et est comparé (B4) au signal spectral (F₅₀, F₅₂, F₅₄) à l'étape d.

12. Procédé selon au moins l'une des revendications 8 à 11, **caractérisé en ce que** la machine est une turbine à gaz.

13. Procédé selon la revendication 12, **caractérisé en ce que**, à l'étape a., le signal électrique est détecté au voisinage d'une transmission (12) de la turbine à gaz, au voisinage d'un compresseur à haute pression (HDV) de la turbine à gaz et/ou au voisinage d'une turbine à haute pression (HDT).

14. Turbomachine comprenant un dispositif selon l'une des revendications 1 à 7.
